# EUROPÄISCHE PATENTANMELDUNG

(11) **EP 3 065 026 A1**
(43) Veröffentlichungstag der Anmeldung: **07.09.2016**
(21) Anmeldenummer: 16158223.4
(22) Anmeldetag: 02.03.2016
(51) Int. Cl.: G06F 1/16, H04N 5/64, G09F 23/00

(54) **ÜBERZUG FÜR FLACHBILDSCHIRME**

(30) Priorität: 05.03.2015 DE 202015001697 U
(71) Anmelder: Möller, Thomas, 71672 Marbach am Neckar (DE)
(72) Erfinder: Möller, Thomas, 71672 Marbach am Neckar (DE)
(74) Vertreter: Ring & Weisbrodt

(57) **Zusammenfassung**

Die vorliegende Erfindung betrifft einen Überzug (1) für einen Flachbildschirm (4), bestehend aus einem beutelförmig gearbeiteten, dehnbaren Material (2), welcher an die Außenkontur des Flachbildschirms (4) angepasst ist, sich über den Flachbildschirm (4) ziehen lässt und ein Mittel, insbesondere einen Gummizug oder ein Gummiband, zum faltenfreien Anlegen des Überzugs (1) an die Vorderseite (7) des Flachbildschirmes (4) aufweist.

## Beschreibung

Die vorliegende Erfindung betrifft einen schutzhüllenartig ausgebildeten Überzug für Flachbildschirme, also Monitore, die eine geringe Tiefe aufweisen. Anwendung finden derartige Flachbildschirme beispielsweise als Fernseher oder Monitore für Computer.

Flachbildschirme sind weit verbreitet und auch oft in Wohnräumen anzufinden. Dort stellen sie im ausgeschalteten Zustand aufgrund ihres zumeist klobigen Aussehens eine große, schwarze und nicht dekorative Fläche dar. Derartige Flächen wirken vor allem in Wohnräumen störend im Hinblick auf die restliche Umgebung des Wohnraums. Ferner kommt hinzu, dass Flachbildschirme im ausgeschalteten, d.h. ungenutzten Zustand, mit Staub besetzt werden, sofern sie über einen längeren Zeitraum in diesen Zustand versetzt sind, woraus mitunter Beeinträchtigungen im Hinblick auf die technische Funktionalität der Flachbildschirme resultieren können. Zudem besteht bei aus dem Stand der Technik bekannten Abdeckungen bzw. Hüllen für Flachbildschirme das Problem, dass diese stets Falten werfen, keinen optimalen Schutz gegen äußere Einflüsse, insbesondere Staub und/oder Feuchtigkeit, gewährleisten und einen Zugriff auf in der Regel an der Rückseite eines Flachbildschirms angeordnete elektrische und/oder mechanische Anschluss- bzw. Installationselemente, insbesondere wegen ihrer Form eines Überwurfs über den gesamten Flachbildschirm, erschweren oder überhaupt nicht zulassen.

Der Erfindung liegt daher die Aufgabe zugrunde, die vorbeschriebenen, bekannten Nachteile zu vermeiden und für Flachbildschirme eine Vorrichtung bereitzustellen, welche verhindert, dass Flachbildschirme im ausgeschalteten Zustand störend in Räumen wirken und ungeschützt über einen längeren Zeitraum einstauben.

Die Aufgabe ist erfindungsgemäß gelöst t durch einen Überzug für einen Flachbildschirm, bestehend aus einem beutelförmig gearbeiteten, dehnbaren beziehungsweise elastischen Material, wobei der Überzug an die Außenkontur des Flachbildschirms angepasst ist, sich über den Flachbildschirm ziehen lässt und ein Mittel, insbesondere einen Gummizug oder ein Gummiband, zum faltenfreien Anlegen des Überzugs an die Vorderseite des Flachbildschirmes aufweist.

Durch einen derartigen Überzug wird zum einen das klobige Aussehen des Flachbildschirmes unter dem Überzug verborgen und zum anderen ein Verstauben des Flachbildschirmes, insbesondere des Bildpanels des Flachbildschirmes, verhindert.

Der Überzug ist dabei derart an einen Flachbildschirm befestigbar, dass die Vorderseite des Flachbildschirms komplett von dem Überzug verdeckt wird. Auf der Rückseite des Flachbildschirms hingegen wird durch die im Überzug integrierten Mittel, insbesondere einen Gummizug oder ein Gummiband, zum faltenfreien Anlegen des Überzugs gewährleistet, dass der Überzug auf der Vorderseite des Flachbildschirms keine Falten wirft und glatt beziehungsweise faltenfrei über diese gespannt ist. Die Befestigung des Überzugs an der Rückseite des Flachbildschirms erfolgt dabei insbesondere im äußeren Bereich beziehungsweise Randbereich der Rückseite des Flachbildschirms.

In einer vorteilhaften Ausgestaltung der Erfindung ist das beutelförmig gearbeitete, dehnbare Material elektrostatisch aufladbar, so dass der sich auf dem Flachbildschirm befindende Staub beim Abziehen des Überzugs von dem elektrostatisch aufladbaren Material gehalten und so vom Flachbildschirm entfernt wird. Auf diese Weise ist der Flachbildschirm nicht nur vor dem Verstauben geschützt, sondern wird vielmehr auch von bereits während der Nutzung des Flachbildschirms auf diesem festgesetztem Staub befreit.

Gemäß einer bevorzugten Ausgestaltung des erfindungsgemäßen Überzugs für einen Flachbildschirm ist das beutelförmig gearbeitete, dehnbare Material optisch gestaltet, wobei diese optische Gestaltung vorzugsweise durch Fotodruck, Textildruck, Färbung oder dergleichen erfolgt. Auf diese Weise wird erreicht, dass der mit dem erfindungsgemäßen Überzog bezogene Flachbildschirm abhängig von der jeweiligen Ausgestaltung wie ein Foto, ein Bild, ein Gemälde, ein Kunstobjekt oder dergleichen wirkt. Des Weiteren ist das beutelförmig gearbeitete, dehnbare Material des erfindungsgemäßen Überzugs auch nachträglich, beispielsweise durch den Anwender beziehungsweise Endnutzer, optisch gestaltbar ist, vorzugsweise durch Bemalen, Bedrucken, Färbung oder dergleichen, woraus eine individuelle Gestaltung eines Wohnraumes erzielt werden kann.

In einer weitere vorteilhaften Ausgestaltung des erfindungsgemäßen Überzugs ist das Mittel zum faltenfreien Anlegen des Überzugs an die Außenkontur der Vorderseite des Flachbildschirmes auf der an der Rückseite des Flachbildschirmes anliegenden Seite des Überzugs angeordnet. Dadurch wird erreicht, dass keine optische Beeinträchtigung an der Vorderseite des Flachbildschirms, welche meist in einen Wohnraum gerichtet ist, durch einen Gummizug, ein Gummiband oder dergleichen erfolgt.

Vorzugsweise ist das beutelförmig gearbeitete, dehnbare Material auf seiner Innenseite zumindest teilweise in an Kanten des Flachbildschirmes anliegenden Bereichen des Überzugs mittels wenigstens einer zusätzlichen Materialschicht verstärkt. Dadurch werden sowohl eine verbesserte Langlebigkeit des Überzuges als auch ein erhöhter Schutz von empfindlichen Stellen des Flachbildschirmes erreicht.

Gemäß einer weiteren vorteilhaften Ausgestaltung der Erfindung ist das beutelförmig gearbeitete, dehnbare Material undurchsichtig, so dass der sich unter dem Überzug befindende Flachbildschirm, insbesondere das dunkle Bildpanel des Flachbildschirms, nicht sichtbar ist. Dies ist von Vorteil, falls ein Flachbildschirm in einem Wohnraum aufgestellt ist, in welchem helle Farben zum Einsatz kommen und ein dunkler Flachbildschirm beziehungsweise dessen Bildpanel einen starken Kontrast hierzu darstellen würden.

Weitere Einzelheiten, Merkmale und Vorteile des Gegenstandes der Erfindung werden nachfolgend anhand der in den Figuren der Zeichnungen dargestellten Ausführungsbeispiele näher erläutert. Dabei zeigen:
- Fig. 1: in einer schematisch perspektivischen Ansicht der Vorderseite ein Ausführungsbeispiel eines erfindungsgemäßen Überzugs für einen Flachbildschirm;

- Fig. 2: in einer schematisch perspektivischen Ansicht der Rückseite ein Ausführungsbeispiel eines erfindungsgemäßen Überzugs für einen Flachbildschirm; und
- Fig. 3: in einer schematischen Aufsicht ein Ausführungsbeispiel eines erfindungsgemäßen Überzugs für einen Flachbildschirm.

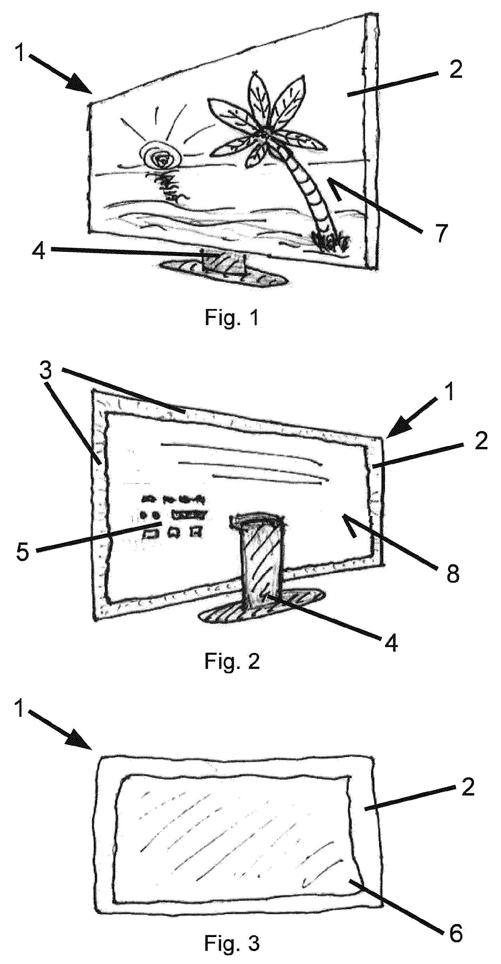

Fig. 1 zeigt in einer schematisch perspektivischen Ansicht die Vorderseite 7 eines erfindungsgemäßen Überzugs 1, welcher auf einen Flachbildschirm 4 gezogen ist. Dabei ist der Überzug 1 an die Außenkontur des Flachbildschirmes 4 derart angepasst, dass der Überzug 1 auf der Vorderseite 7 des Flachbildschirmes 4 keine Falten wirft und glatt an dessen Oberfläche anliegt. Eine derartige Funktion wird durch Verwendung eines beutelförmig gearbeiteten, dehnbaren Materials 2 erzielt. Gemäß Fig. 1 ist der Überzug 1 mittels eines auf dem beutelförmig gearbeiteten, dehnbaren Material 2 aufgebrachten Fotodrucks optisch gestaltet, wobei vorliegend das beutelförmig gearbeitete, dehnbare Material 2 undurchsichtig ist und dadurch das dunkel Bildpanel des Flachbildschirmes 4 unter dem aufgebrachten Fotodruck nicht sichtbar ist.

Fig. 2 zeigt in einer weiteren perspektivischen Ansicht die Rückseite 8 eines erfindungsgemäßen Überzugs 1, welcher auf einen Flachbildschirm 4 gezogen ist. In Fig. 2 ist ein Mittel 3 zum faltenfreien Anlegen des Überzugs 1 an die Vorderseite 7 des Flachbildschirmes 4 sichtbar, welches sich vorliegend durch einen im Randbereich des beutelförmig gearbeiteten, dehnbaren Materials 2 eingearbeiteten, umlaufenden Gummizug an die Außenkontur des Flachbildschirmes 4 auf dessen Rückseite 8 anlegt und dadurch den auf dem Flachbildschirm angebrachten Überzug 1 auf dessen Vorderseite strafft. Gemäß Fig. 2 wird ein Anschlussbereich 5 des Flachbildschirmes 4 insbesondere auf dessen Rückseite 8 nicht von dem Überzug 1 beziehungsweise von dem beutelförmig gearbeiteten, dehnbaren Material 2 verdeckt, so dass sämtliche im Anschlussbereich 5 angeordneten Anschlüsse des Flachbildschirmes 4 frei zugänglich sind.

Fig. 3 zeigt eine weitere Ausgestaltung eines erfindungsgemäßen Überzugs 1, welcher vorliegend nicht auf einen Flachbildschirm 4 aufgezogen ist und eine vorzugsweise auf der Innenseite des Überzugs 1 aufgebrachte Beschichtung 6 zur elektrostatischen Aufladung des aus einem beutelförmig gearbeiteten, dehnbaren Material 2 bestehenden Überzugs 1 aufweist. Durch eine derartige elektrostatische Beschichtung 6 kann sich der auf einem Flachbildschirm 4 befindende Staub beim Abziehen des Überzugs 1 von dem elektrostatisch aufladbaren Material gehalten und auf diese Weise vom Flachbildschirm 4 entfernt werden.

Die in den Figuren der Zeichnung dargestellten und im Zusammenhang mit diesen erläuterten Ausführungsbeispiele der Erfindung dienen lediglich der Erläuterung der Erfindung und sind für diese nicht beschränkend.

### Bezugszeichenliste:

- 1: Überzug
- 2: Beutelförmig gearbeitetes, dehnbares Material
- 3: Mittel zum faltenfreien Anlegen
- 4: Flachbildschirm
- 5: Anschlussbereich des Flachbildschirms
- 6: Beschichtung für elektrostatische Aufladung
- 7: Vorderseite
- 8: Rückseite

## Patentansprüche

1. Überzug (1) für einen Flachbildschirm (4), bestehend aus einem beutelförmig gearbeiteten, dehnbaren Material (2), welcher an die Außenkontur des Flachbildschirms (4) angepasst ist, sich über den Flachbildschirm (4) ziehen lässt und ein Mittel (3), insbesondere einen Gummizug oder ein Gummiband, zum faltenfreien Anlegen des Überzugs (1) an die Vorderseite (7) des Flachbildschirmes (4) aufweist.

2. Überzug (1) nach Anspruch 1, **dadurch gekennzeichnet, dass** das beutelförmig gearbeitete, dehnbare Material (2) mittels einer Beschichtung (6) elektrostatisch aufladbar ist, so dass sich auf dem Flachbildschirm (4) befindender Staub beim Abziehen des Überzugs (1) von dem elektrostatisch aufladbaren Material gehalten und so vom Flachbildschirm (4) entfernt wird.

3. Überzug (1) nach Anspruch 1 oder Anspruch 2, **dadurch gekennzeichnet, dass** das beutelförmig gearbeitete, dehnbare Material (2) vorzugsweise durch Fotodruck, Textildruck, Färbung oder dergleichen optisch gestaltet und/oder vorzugsweise durch Bemalen, Bedrucken, Färbung oder dergleichen optisch gestaltbar ist.

4. Überzug (1) nach einem der Ansprüche 1 bis 3, **dadurch gekennzeichnet, dass** das Mittel (3) zum faltenfreien Anlegen des Überzugs (1) an die Außenkontur der Vorderseite (7) des Flachbildschirmes (4) auf der an der Rückseite (8) des Flachbildschirmes (4) anliegenden Seite des Überzugs (1) angeordnet ist.

5. Überzug (1) nach einem der Ansprüche 1 bis 4, **dadurch gekennzeichnet, dass** das beutelförmig gearbeitete, dehnbare Material (2) auf seiner Innenseite zumindest teilweise in an Kanten des Flachbildschirmes (4) anliegenden Bereichen des Überzugs (1) mittels wenigstens einer zusätzlichen Materialschicht verstärkt ist.

6. Überzug (1) nach einem der Ansprüche 1 bis 5, **dadurch gekennzeichnet, dass** das beutelförmig gearbeitete, dehnbare Material (2) undurchsichtig ist und der sich unter dem Überzug (1) befindende Flachbildschirm (4), insbesondere das dunkle Bildpanel des Flachbildschirms (4), nicht sichtbar ist.

7. Überzug (1) nach einem der Ansprüche 1 bis 6, **dadurch gekennzeichnet, dass** das beutelförmig gearbeitete, dehnbare Material (2) des Überzugs (1), insbesondere das auf der Rückseite (8) des Flachbildschirmes (4) angeordnete Mittel (3) zum faltenfreien Anlegen des Überzugs (1), einen Anschlussbereich (5) des Flachbildschirmes (4) nicht verdeckt.
